# EUROPEAN PATENT APPLICATION

(11) **EP 4 321 783 A1**
(43) Date of publication of application: **14.02.2024**
(21) Application number: 22784548.4
(22) Date of filing: 25.03.2022
(51) Int. Cl.: F16K 27/00, F25B 41/26

(54) **VALVE DEVICE ASSEMBLY**

(30) Priority: 09.04.2021 JP 2021066500
(71) Applicant: Fujikoki Corporation, Tokyo 158-0082 (JP)
(72) Inventor: KAINUMA Hiroshi, Tokyo 158-0082 (JP); MIYAMOTO Kazuhiro, Tokyo 158-0082 (JP)
(74) Representative: Ter Meer Steinmeister & Partner
(86) International application number: PCT/JP2022/014738
(87) International publication number: WO 2022/215563

(57) **Abstract**

[Object] To provide a valve device assembly capable of suppressing heat exchange between valve devices.

[Solution] A valve device assembly (5) includes a high-pressure valve device (10) and a low-pressure valve device (20). The high-pressure valve device (10) and the low-pressure valve device (20) each include a valve body including refrigerant passages and valve units mounted on the valve body. A high-pressure valve body (100) of the high-pressure valve device (10) is disposed apart from a low-pressure valve body (200) of the low-pressure valve device (20).

## Description

### Technical Field

The present invention relates to a valve device assembly combining multiple valve devices.

### Background Art

Patent Literature 1 discloses an example of a vehicle air conditioning device according to the related art. The vehicle air conditioning device in Patent Literature 1 includes a compressor, an indoor condenser, an outdoor heat exchanger, an indoor evaporator, an accumulator, a first expansion valve, a second expansion valve, a first on-off valve, a second on-off valve, and a check valve. The vehicle air conditioning device further includes a first refrigerant passage, a second refrigerant passage, a third refrigerant passage, and a bypass passage.

The compressor includes a discharge port that is connected to an inlet of the indoor condenser. The first refrigerant passage connects an outlet of the indoor condenser to an inlet of the outdoor heat exchanger. The second refrigerant passage connects an outlet of the outdoor heat exchanger to an inlet of the accumulator. The third refrigerant passage connects the outlet of the outdoor heat exchanger to an inlet of the indoor evaporator. The indoor evaporator includes an outlet that is connected to the inlet of the accumulator. The accumulator includes an outlet that is connected to a suction port of the compressor.

The first expansion valve can change the passage area of the first refrigerant passage. The first on-off valve can open and close the second refrigerant passage. The second expansion valve can change the passage area of the third refrigerant passage. The check valve is disposed between the outlet of the outdoor heat exchanger and the second expansion valve in the third refrigerant passage. The check valve allows refrigerant to flow from the outlet of the outdoor heat exchanger to the second expansion valve. The check valve restricts refrigerant from flowing from the second expansion valve to the outlet of the outdoor heat exchanger.

The bypass passage connects a first point in the first refrigerant passage to a second point in the third refrigerant passage, the first point is between the outlet of the indoor condenser and the first expansion valve, and the second point is between the check valve and the second expansion valve. The second on-off valve can open and close the bypass passage.

### Citation List

### Patent Literature

Patent Literature 1: Japanese Unexamined Patent Application Publication No. 2015-77816

### Summary of Invention

### Technical Problem

The vehicle air conditioning device has a configuration in which the first on-off valve is connected to pipes via connectors. In the configuration, the first expansion valve, the second on-off valve, and the check valve are also connected to pipes and the like via connectors. This increases the number of connecting points in the vehicle air conditioning device, resulting in a higher possibility of refrigerant leakage.

For example, a valve device, which includes one valve body including refrigerant passages and valve units mounted on the valve body, can solve such a problem of refrigerant leakage. In the valve device, the refrigerant passages are connected to the valve units inside the valve body. This enables refrigerant leakage at a point of connecting the refrigerant passages to each other and at a point of connecting the valve units to the refrigerant passages to be suppressed. A plurality of the valve devices can be incorporated in the vehicle air conditioning device. In order to facilitate incorporation of the valve devices in the vehicle air conditioning device and to reduce the space required for the installation of the valve devices, two valve devices may be combined and secured to each other to form a valve device assembly. However, in a configuration in which high-temperature refrigerant flows into a first valve device of the valve device assembly and low-temperature refrigerant flows into a second valve device of the valve device assembly, heat exchange can occur between the first valve device and the second valve device, decreasing the cooling efficiency and the heating efficiency of the vehicle air conditioning device.

Accordingly, it is an object of the present invention to provide a valve device assembly capable of suppressing heat exchange between valve devices.

### Solution to Problem

To achieve the object described above, a valve device assembly according to an aspect of the present invention includes valve devices that are combined. The valve devices each include a valve body including refrigerant passages and valve units mounted on the valve body. A first valve device of the valve devices includes the valve body referred to as a first valve body, a second valve device of the valve devices includes the valve body referred to as a second valve body, and the first valve body is disposed apart from the second valve body.

In the present invention, preferably, the first valve body and the second valve body are connected by a bolt. Preferably, the bolt is made of a material with a lower thermal conductivity than a thermal conductivity of each of the first valve body and the second valve body.

In the present invention, preferably, a spacer is interposed between the first valve body and the second valve body. Preferably, the spacer is made of a material with a lower thermal conductivity than the thermal conductivity of each of the first valve body and the second valve body.

In the present invention, preferably, the first valve body and the second valve body are located with a gap in between. Preferably, no pipe connects any of the refrigerant passages of the first valve body and any of the refrigerant passages of the second valve body within the gap.

In the present invention, preferably, the refrigerant passages of the first valve body include a refrigerant passage connected to a discharge port of a compressor of an air conditioning device. Preferably, the refrigerant passages of the second valve body include a refrigerant passage connected to a suction port of the compressor via an accumulator.

### Advantageous Effects of Invention

The valve device assembly according to the present invention includes the valve devices that are combined. The valve devices each include the valve body including refrigerant passages and the valve units mounted on the valve body. The valve body (the first valve body) of the first valve device of the valve devices is disposed apart from the valve body (the second valve body) of the second valve device of the valve devices. With this configuration, it is possible to suppress heat exchange between the first valve body and the second valve body due to their contact. Therefore, it is possible to suppress the cooling efficiency and the heating efficiency from decreasing.

### Brief Description of Drawings

[Fig. 1] Fig. 1 is a diagram illustrating a schematic configuration of an air conditioning device including a valve device assembly according to an embodiment of the present invention.
[Fig. 2] Fig. 2 is a diagram illustrating a flow of refrigerant of the air conditioning device in Fig. 1 in a cooling operation mode.
[Fig. 3] Fig. 3 is a diagram illustrating a flow of refrigerant of the air conditioning device in Fig. 1 in a heating operation mode.
[Fig. 4] Fig. 4 is a diagram illustrating a flow of refrigerant of the air conditioning device in Fig. 1 in a dehumidification heating operation mode.
[Fig. 5] Fig. 5 is a perspective view of a high-pressure valve device of the air conditioning device in Fig. 1.
[Fig. 6] Fig. 6 is a front view of the high-pressure valve device in Fig. 5.
[Fig. 7] Fig. 7 is a plan view of the high-pressure valve device in Fig. 5.
[Fig. 8] Fig. 8 is a right-side view of the high-pressure valve device in Fig. 5.
[Fig. 9] Fig. 9 is a sectional view taken along line A1-A1 of Fig. 7.
[Fig. 10] Fig. 10 is a sectional view taken along line B1-B1 of Fig. 6.
[Fig. 11] Fig. 11 is a sectional view of a first high-pressure on-off valve unit of the high-pressure valve device in Fig. 5.
[Fig. 12] Fig. 12 is a perspective view of a low-pressure valve device of the air conditioning device in Fig. 1.
[Fig. 13] Fig. 13 is a front view of the low-pressure valve device in Fig. 12.
[Fig. 14] Fig. 14 is a plan view of the low-pressure valve device in Fig. 12.
[Fig. 15] Fig. 15 is a right-side view of the low-pressure valve device in Fig. 12.
[Fig. 16] Fig. 16 is a sectional view taken along line A2-A2 of Fig. 14.
[Fig. 17] Fig. 17 is a sectional view taken along line B2-B2 of Fig. 13.
[Fig. 18] Fig. 18 is a sectional view of a part of a first low-pressure on-off valve unit of the low-pressure valve device in Fig. 12.
[Fig. 19] Fig. 19 is a diagram of the valve device assembly including the high-pressure valve device and the low-pressure valve device that are combined, as the valve device assembly is viewed in a front direction of the high-pressure valve device.
[Fig. 20] Fig. 20 is a diagram of the valve device assembly including the high-pressure valve device and the low-pressure valve device that are combined, as the valve device assembly is viewed from above.
[Fig. 21] Fig. 21 is a diagram illustrating a configuration of a modification of the valve device assembly in Fig. 19.

### Description of Embodiments

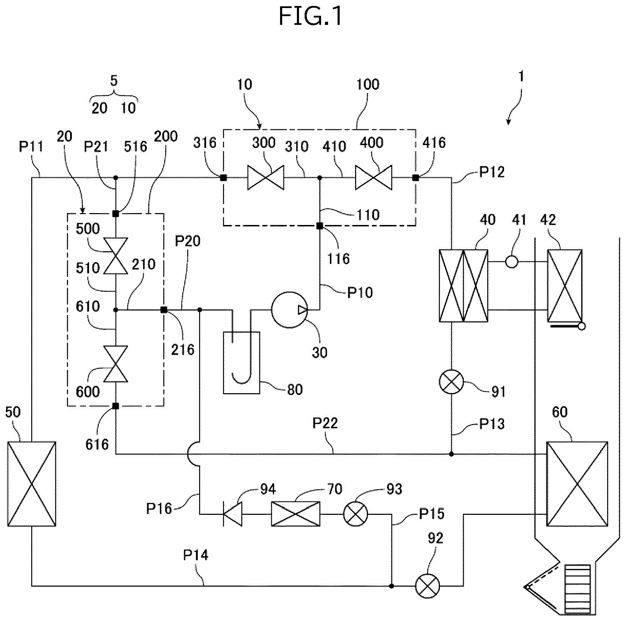

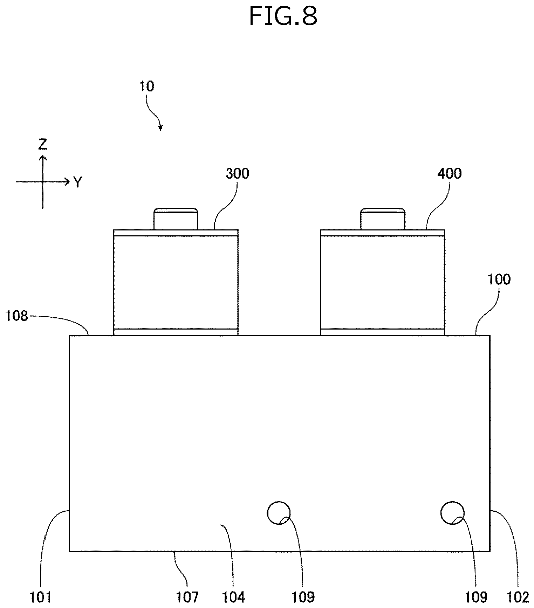

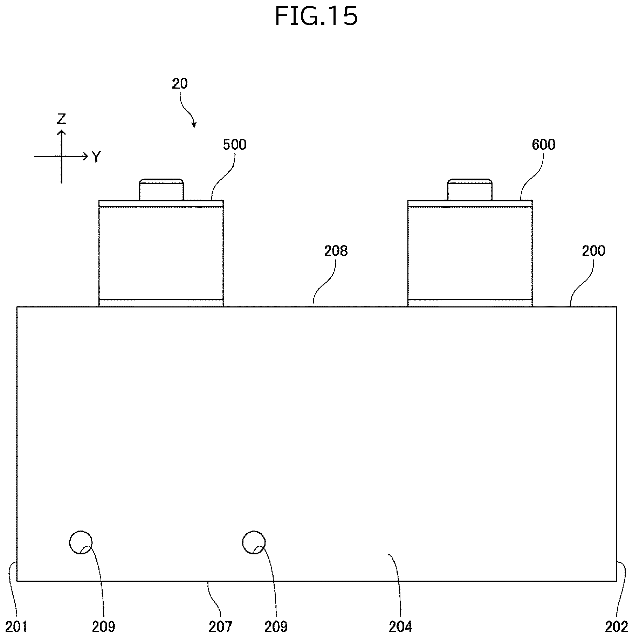

A valve device assembly according to an embodiment of the present invention is described below with reference to Fig. 1 to Fig. 21.

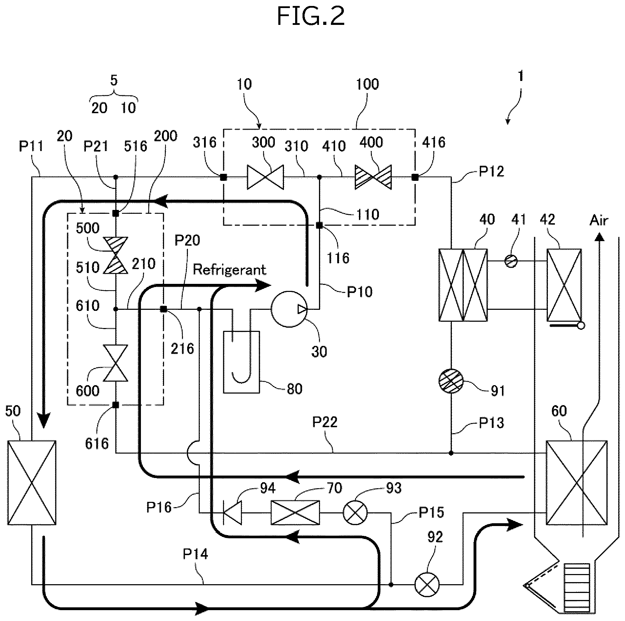

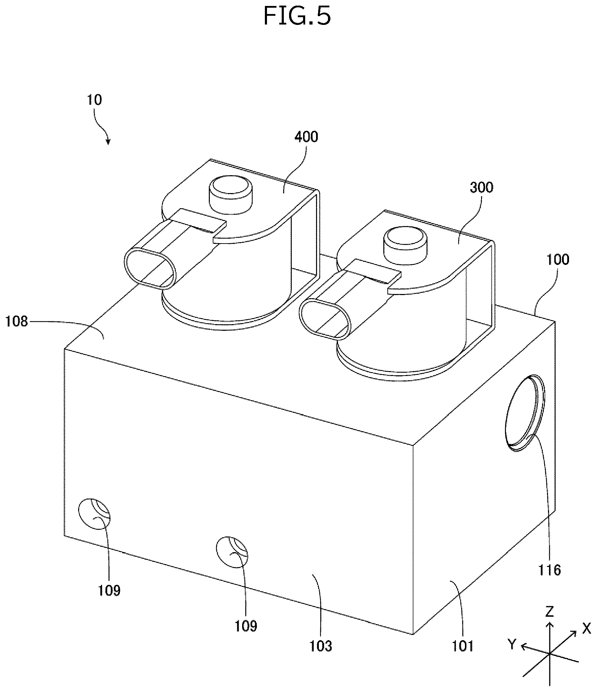

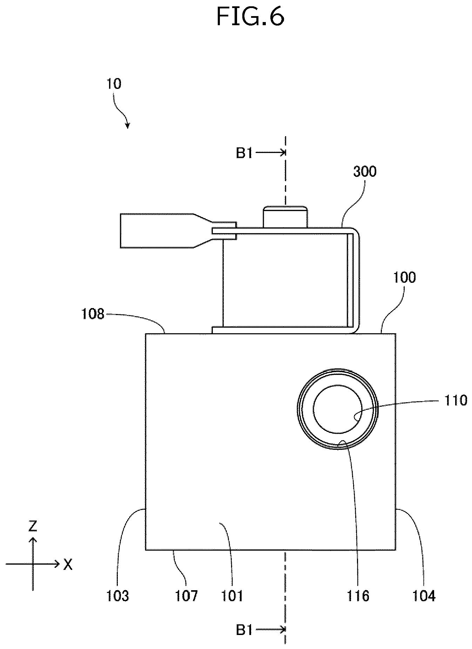

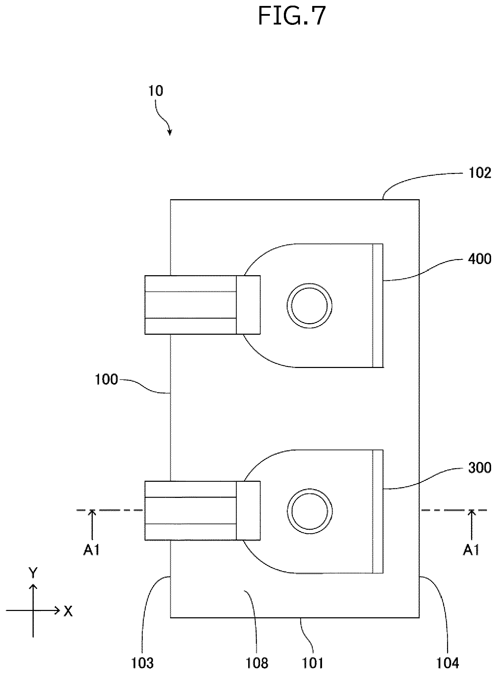

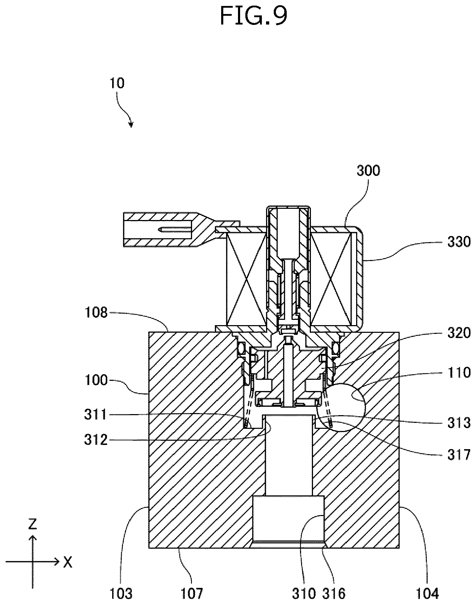

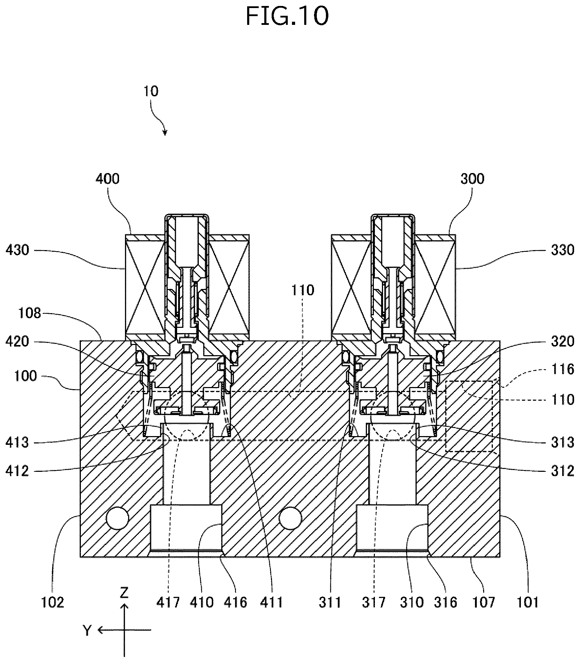

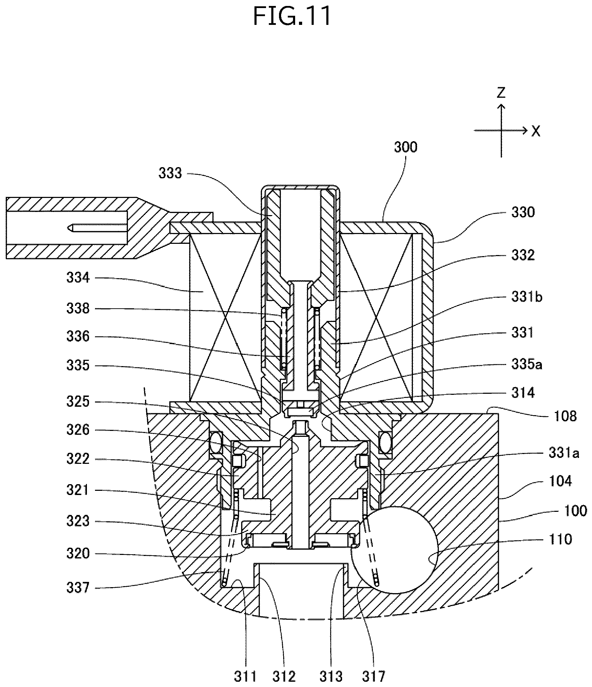

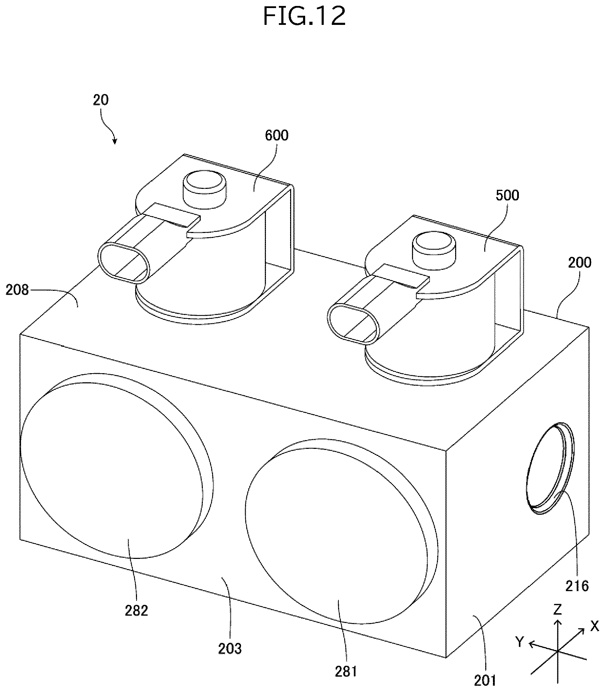

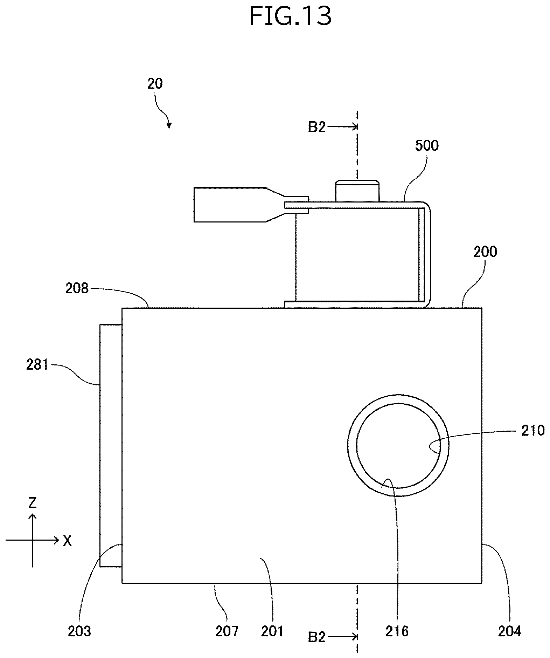

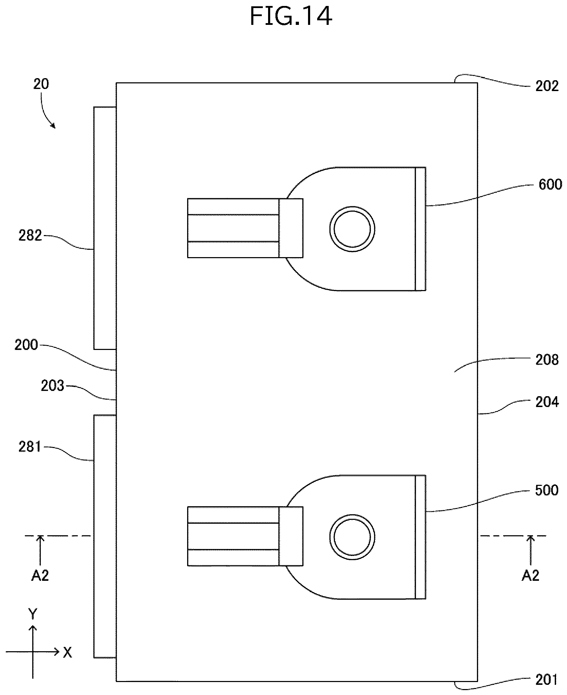

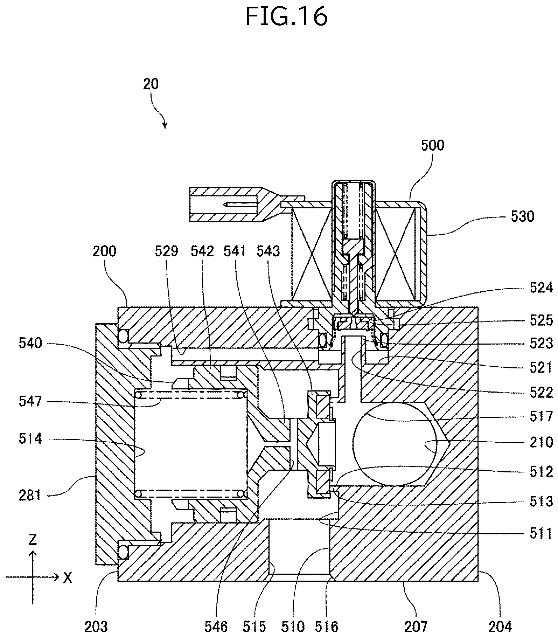

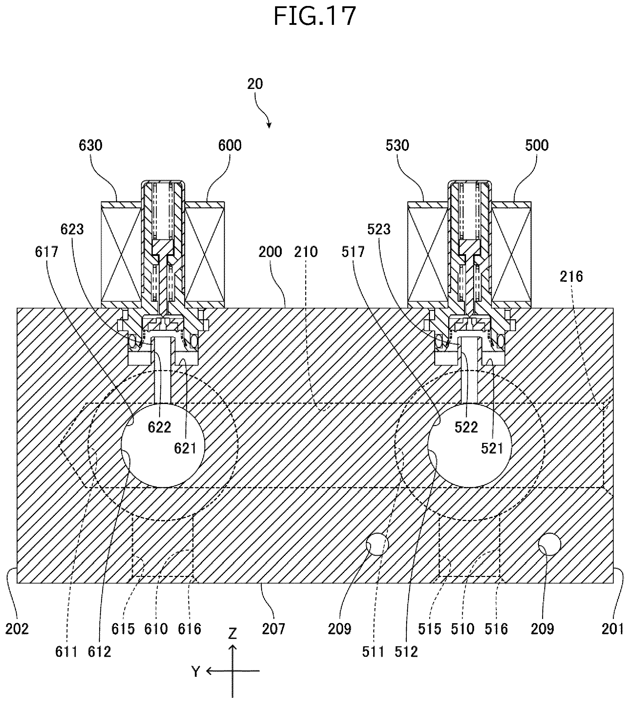

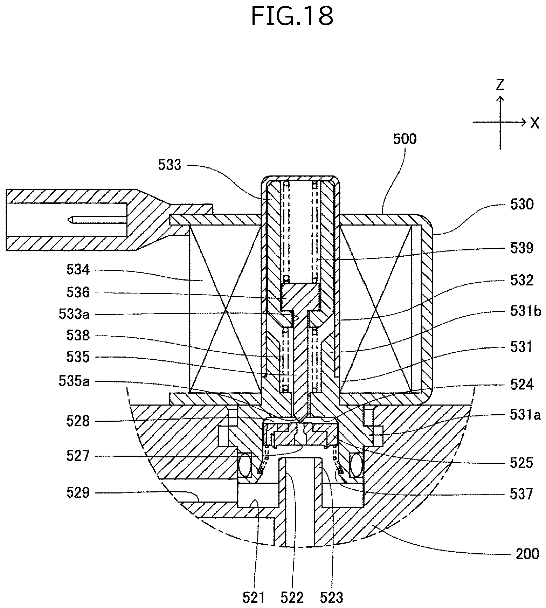

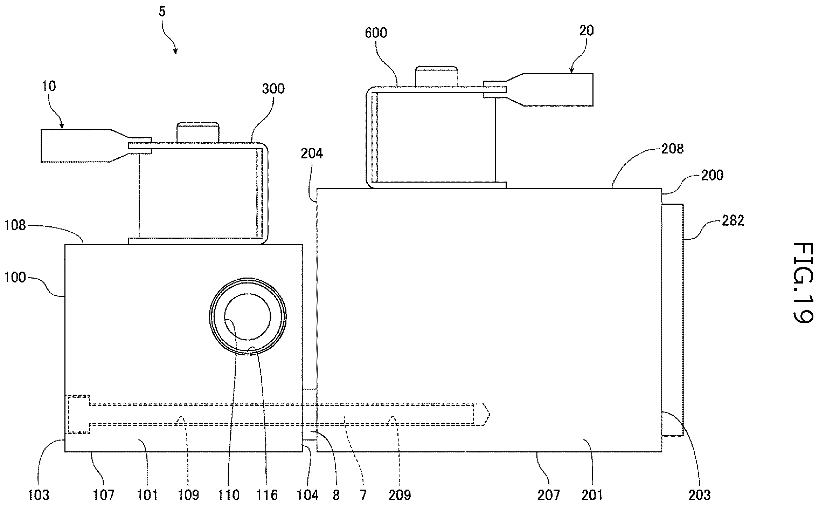

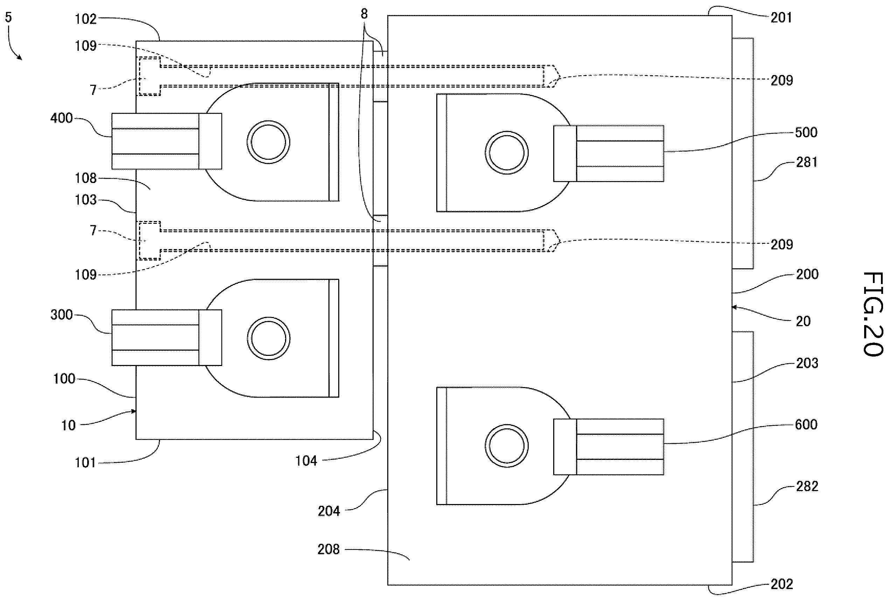

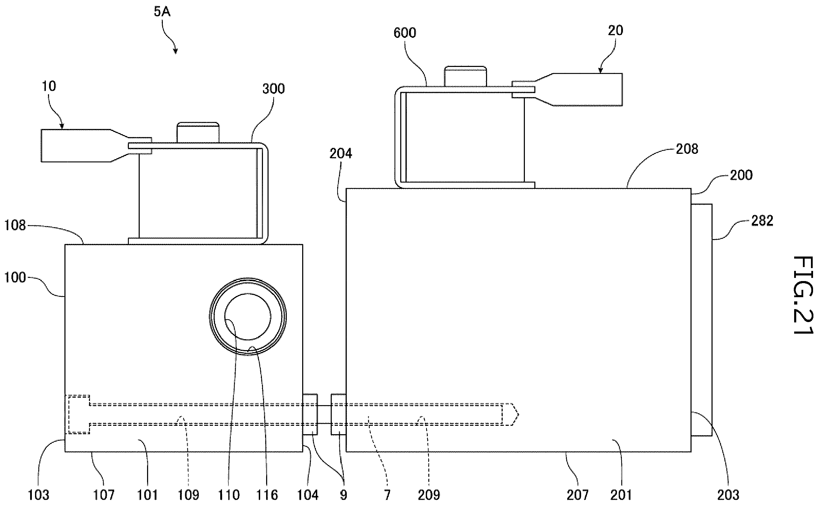

Fig. 1 is a diagram illustrating a schematic configuration of an air conditioning device including the valve device assembly according to the embodiment of the present invention. Fig. 2 to Fig. 4 are diagrams illustrating a flow of refrigerant of the air conditioning device in Fig. 1. Fig. 2, Fig. 3, and Fig. 4 are diagrams illustrating the flows of refrigerant in a cooling operation mode, a heating operation mode, and a dehumidification heating operation mode. In Fig. 2 to Fig. 4, the devices with hatching are in a state where the refrigerant passage is closed or its operation is stopped. Fig. 5, Fig. 6, Fig. 7, and Fig. 8 are a perspective view, a front view, a plan view, and a right-side view of a high-pressure valve device of the air conditioning device in Fig. 1. Fig. 9 is a sectional view taken along line A1-A1 of Fig. 7. Fig. 10 is a sectional view taken along line B1-B1 of Fig. 6. Fig. 11 is a sectional view of a first high-pressure on-off valve unit of the high-pressure valve device in Fig. 5. Fig. 12, Fig. 13, Fig. 14, and Fig. 15 are a perspective view, a front view, a plan view, and a right-side view of a low-pressure valve device of the air conditioning device in Fig. 1. Fig. 16 is a sectional view taken along line A2-A2 of Fig. 14. Fig. 17 is a sectional view taken along line B2-B2 of Fig. 13. Fig. 18 is a sectional view of a part of a first low-pressure on-off valve unit of the low-pressure valve device in Fig. 12. Fig. 19 is a diagram of the valve device assembly including the high-pressure valve device in Fig. 5 and the low-pressure valve device in Fig. 12 that are combined, as viewed in a front direction of the high-pressure valve device, and Fig. 20 is a diagram of the valve device assembly, as viewed from above. Fig. 21 is a diagram illustrating a configuration of a modification of the valve device assembly in Fig. 19. Fig. 21 is the diagram of the valve device assembly viewed in the front direction of the high-pressure valve device. In each figure, an X direction indicated by arrow X represents a left-and-right direction (lateral direction), a Y direction indicated by arrow Y represents a front-and-back direction, and a Z direction indicated by arrow Z represents an up-and-down direction. The direction with the letter "X" on arrow X represents the right direction, the direction with the letter "Y" on arrow Y represents the backward direction, and the direction with the letter "Z" on arrow Z represents the upward direction.

An air conditioning device 1 including the valve device assembly according to the present embodiment is, for example, a vehicle air conditioning device installed in a vehicle for heating and cooling air blown into the cabin of the vehicle. The air conditioning device 1 can also cool a driving battery installed in the vehicle.

As illustrated in Fig. 1, the air conditioning device 1 includes a valve device assembly 5, a compressor 30, an indoor condenser 40, a pump 41, a heater core 42, an outdoor heat exchanger 50, an indoor evaporator 60, a battery evaporator 70, and an accumulator 80. The air conditioning device 1 includes a first expansion valve 91, a second expansion valve 92, a third expansion valve 93, and a check valve 94. The valve device assembly 5 includes a high-pressure valve device 10 and a low-pressure valve device 20.

The high-pressure valve device 10 and the low-pressure valve device 20 are described below. The high-pressure valve device 10 and the low-pressure valve device 20 are combined as illustrated in Fig. 19 and Fig. 20 to form a valve device assembly 5. The high-pressure valve device 10 is connected directly (i.e., without any functional members therebetween) to a discharge port of the compressor 30. Relatively high-temperature refrigerant flows through the high-pressure valve device 10. The low-pressure valve device 20 is connected to a suction port of the compressor 30 via the accumulator 80. Relatively low-temperature refrigerant flows through the low-pressure valve device 20.

As illustrated in Fig. 5 to Fig. 11, the high-pressure valve device 10 includes a high-pressure valve body 100, a first high-pressure on-off valve unit 300, and a second high-pressure on-off valve unit 400. The high-pressure valve device 10 is a first valve device.

The high-pressure valve body 100 is formed, for example, by extruding an aluminum alloy. The high-pressure valve body 100 has a rectangular parallelepiped shape. The high-pressure valve body 100 includes a front surface 101, a back surface 102, a left surface 103, a right surface 104, a bottom surface 107, and an upper surface 108. Each surface is flat. The front surface 101 and the back surface 102 are parallel to each other. The left surface 103 and the right surface 104 are parallel to each other. The left surface 103 is at a right angle to the front surface 101. The bottom surface 107 and the upper surface 108 are parallel to each other. The bottom surface 107 is at a right angle to the front surface 101 and is at a right angle to the left surface 103. The high-pressure valve body 100 is a first valve body.

The front surface 101 includes a main high-pressure-refrigerant passage opening 116. The bottom surface 107 includes a first branch high-pressure-refrigerant passage opening 316 and a second branch high-pressure-refrigerant passage opening 416.

The main high-pressure-refrigerant passage opening 116 is, as illustrated in Fig. 1, connected to the discharge port of the compressor 30 via a pipe P10. The first branch high-pressure-refrigerant passage opening 316 is connected to a first connection port of the outdoor heat exchanger 50 via a pipe P11. The second branch high-pressure-refrigerant passage opening 416 is connected to an inlet of the indoor condenser 40 via a pipe P12.

The high-pressure valve body 100 includes refrigerant passages formed by cutting. Specifically, the high-pressure valve body 100 includes a main high-pressure-refrigerant passage 110, a first branch high-pressure-refrigerant passage 310, and a second branch high-pressure-refrigerant passage 410.

The main high-pressure-refrigerant passage 110 extends linearly from the front surface 101 toward the back surface 102. The main high-pressure-refrigerant passage 110 is connected to the main high-pressure-refrigerant passage opening 116. The main high-pressure-refrigerant passage 110 has a circular columnar shape. The main high-pressure-refrigerant passage 110 may have a constant diameter along its length. The main high-pressure-refrigerant passage 110 may have a columnar shape other than the circular columnar shape. The front surface 101 is one surface.

The first branch high-pressure-refrigerant passage 310 extends linearly from the bottom surface 107 toward the upper surface 108. The first branch high-pressure-refrigerant passage 310 is connected to the first branch high-pressure-refrigerant passage opening 316. The bottom surface 107 is the other surface.

The first high-pressure on-off valve unit 300 is disposed in the first branch high-pressure-refrigerant passage 310. The first branch high-pressure-refrigerant passage 310 includes, as illustrated in Fig. 9 and Fig. 10, a first high-pressure main valve chamber 311 and a first high-pressure main valve port 312. A central axis of the first high-pressure main valve chamber 311 is parallel to the up-and-down direction. The first high-pressure main valve chamber 311 and the first high-pressure main valve port 312 are disposed coaxially. The first high-pressure main valve port 312 is open to the first high-pressure main valve chamber 311. The first high-pressure main valve port 312 is enclosed by a first high-pressure main valve seat 313 in the first high-pressure main valve chamber 311.

The first high-pressure main valve chamber 311 has a circular columnar shape. The first high-pressure main valve chamber 311 is a circular columnar shape portion of the first branch high-pressure-refrigerant passage 310. A part of the first high-pressure main valve chamber 311 overlaps the main high-pressure-refrigerant passage 110. A first high-pressure connecting opening 317 is formed at a point where the first high-pressure main valve chamber 311 and the main high-pressure-refrigerant passage 110 overlap. The first high-pressure connecting opening 317 connects the main high-pressure-refrigerant passage 110 to the first branch high-pressure-refrigerant passage 310 (the first high-pressure main valve chamber 311). The first high-pressure main valve port 312 has a circular columnar shape with a smaller diameter than the first high-pressure main valve chamber 311. The first high-pressure main valve port 312 connects the first high-pressure main valve chamber 311 to the first branch high-pressure-refrigerant passage opening 316. The first high-pressure main valve chamber 311 and the first high-pressure main valve port 312 may have a columnar shape other than the circular columnar shapes.

The second branch high-pressure-refrigerant passage 410 extends linearly from the bottom surface 107 toward the upper surface 108. The second branch high-pressure-refrigerant passage 410 is connected to the second branch high-pressure-refrigerant passage opening 416.

The second high-pressure on-off valve unit 400 is disposed in the second branch high-pressure-refrigerant passage 410. The second branch high-pressure-refrigerant passage 410 includes, as illustrated in Fig. 10, a second high-pressure main valve chamber 411 and a second high-pressure main valve port 412. A central axis of the second high-pressure main valve chamber 411 is parallel to the up-and-down direction. The second high-pressure main valve chamber 411 and the second high-pressure main valve port 412 are disposed coaxially. The second high-pressure main valve port 412 is open to the second high-pressure main valve chamber 411. The second high-pressure main valve port 412 is enclosed by a second high-pressure main valve seat 413 in the second high-pressure main valve chamber 411.

The second high-pressure main valve chamber 411 has a circular columnar shape. The second high-pressure main valve chamber 411 is a circular columnar shape portion of the second branch high-pressure-refrigerant passage 410. A part of the second high-pressure main valve chamber 411 overlaps the main high-pressure-refrigerant passage 110. A second high-pressure connecting opening 417 is formed at a point where the second high-pressure main valve chamber 411 and the main high-pressure-refrigerant passage 110 overlap. The second high-pressure connecting opening 417 connects the main high-pressure-refrigerant passage 110 to the second branch high-pressure-refrigerant passage 410 (the second high-pressure main valve chamber 411). The second high-pressure main valve port 412 has a circular columnar shape with a smaller diameter than the second high-pressure main valve chamber 411. The second high-pressure main valve port 412 connects the second high-pressure main valve chamber 411 to the second branch high-pressure-refrigerant passage opening 416. The second high-pressure main valve chamber 411 and the second high-pressure main valve port 412 may have a columnar shape other than the circular columnar shapes.

A central axis of the main high-pressure-refrigerant passage 110 is parallel to the front-and-back direction. A central axis of the first branch high-pressure-refrigerant passage 310 and a central axis of the second branch high-pressure-refrigerant passage 410 are parallel to the up-and-down direction. The central axis of the first branch high-pressure-refrigerant passage 310 is shifted from the central axis of the main high-pressure-refrigerant passage 110 in the left-and-right direction (i.e., the central axes are located with a gap between them in the left-and-right direction), and the central axes do not intersect each other. The central axis of the second branch high-pressure-refrigerant passage 410 is also shifted from the central axis of the main high-pressure-refrigerant passage 110 in the left-and-right direction, and the central axes do not intersect each other.

The high-pressure valve body 100 has through holes 109 that extend from the left surface 103 to the right surface 104. Bolts 7 are disposed in the through holes 109.

The first high-pressure on-off valve unit 300 is disposed in the upper surface 108, near the front surface 101. The first high-pressure on-off valve unit 300 can open and close the first branch high-pressure-refrigerant passage 310. That is, the first high-pressure on-off valve unit 300 can change the passage area of the first branch high-pressure-refrigerant passage 310 to zero or to an area greater than zero. The first high-pressure on-off valve unit 300 is a first valve unit.

As illustrated in Fig. 9 to Fig. 11, the first high-pressure on-off valve unit 300 constitutes a pilot-operated on-off valve together with the first high-pressure main valve chamber 311, the first high-pressure main valve port 312, and the first high-pressure main valve seat 313 of the high-pressure valve body 100. The first high-pressure main valve chamber 311 is a first valve chamber. The first high-pressure main valve port 312 is a first valve port. The first high-pressure on-off valve unit 300 may include a valve chamber and a valve seat like an electric valve, for example, disclosed in Japanese Unexamined Patent Application Publication No. 2016-200198.

The first high-pressure on-off valve unit 300 includes a main valve member 320 and a valve-member-driving section 330.

The main valve member 320 integrally includes a body portion 321, a large-diameter flange portion 322, and a small-diameter flange portion 323. The body portion 321 has a circular columnar shape. The large-diameter flange portion 322 is provided continuously with the upper part of the body portion 321. The small-diameter flange portion 323 is provided continuously with the lower part of the body portion 321. The body portion 321 includes a pilot passage 325. The large-diameter flange portion 322 includes a pressure equalizing passage 326. The main valve member 320 comes into contact with and moves away from the first high-pressure main valve seat 313, opening and closing the first high-pressure main valve port 312. That is, the main valve member 320 changes the opening area of the first high-pressure main valve port 312 to zero or to an area greater than zero. A valve opening spring 337 is disposed between the large-diameter flange portion 322 of the main valve member 320 and the high-pressure valve body 100. The valve opening spring 337 is a compression coil spring. The valve opening spring 337 pushes the main valve member 320 (the large-diameter flange portion 322) upward.

The valve-member-driving section 330 includes a fixed core 331, a case 332, a plunger 333, an electromagnetic coil 334, a pilot valve member 335, and a valve shaft 336.

The fixed core 331 integrally includes a large-diameter cylindrical portion 331a and a small-diameter cylindrical portion 331b. The large-diameter cylindrical portion 331a is mounted on the high-pressure valve body 100 by a screw structure. The small-diameter cylindrical portion 331b is disposed coaxially with the large-diameter cylindrical portion 331a. The small-diameter cylindrical portion 331b projects from the upper surface 108 of the high-pressure valve body 100. The large-diameter flange portion 322 of the main valve member 320 is disposed inside the large-diameter cylindrical portion 331a and can move in the up-and-down direction. The large-diameter flange portion 322 of the main valve member 320 separates a first high-pressure back pressure chamber 314 inside the large-diameter cylindrical portion 331a from the first high-pressure main valve chamber 311. The pilot passage 325 connects the first high-pressure back pressure chamber 314 to the first high-pressure main valve port 312. The pressure equalizing passage 326 connects the first high-pressure main valve chamber 311 to the first high-pressure back pressure chamber 314.

The case 332 has a circular cylindrical shape that is open at the lower end and is closed at the upper end. The small-diameter cylindrical portion 331b of the fixed core 331 is disposed inside the lower end of the case 332. The lower end of the case 332 is bonded to the fixed core 331.

The plunger 333 has a circular cylindrical shape. The plunger 333 is disposed inside the case 332 and can move in the up-and-down direction. A plunger spring 338 is disposed between the lower end of the plunger 333 and the fixed core 331. The plunger spring 338 is a compression coil spring. The plunger spring 338 pushes the plunger 333 upward.

The electromagnetic coil 334 has a circular cylindrical shape. The case 332 is disposed in the electromagnetic coil 334. The electromagnetic coil 334 is disposed outside the case 332. The electromagnetic coil 334 magnetizes the fixed core 331 and the plunger 333.

The pilot valve member 335 is provided integrally and continuously with the lower end of the valve shaft 336. The pilot valve member 335 is disposed in the first high-pressure back pressure chamber 314. The pilot valve member 335 is connected to the plunger 333 via the valve shaft 336. A pilot valve portion 335a that is packing having a disc shape is provided in the pilot valve member 335. The pilot valve portion 335a opens and closes the pilot passage 325.

The valve shaft 336 has an elongated circular cylindrical shape. The upper end of the valve shaft 336 is secured to the lower end of the plunger 333. The valve shaft 336 is disposed inside the small-diameter cylindrical portion 331b of the fixed core 331. The valve shaft 336 is supported by the small-diameter cylindrical portion 331b and can move in the up-and-down direction.

In the first high-pressure on-off valve unit 300, when the electromagnetic coil 334 is energized, the plunger 333 is moved toward the fixed core 331 by magnetic force, and the pilot valve member 335 (the pilot valve portion 335a) closes the pilot passage 325. Furthermore, the pilot valve member 335 pushes the main valve member 320 downward, and the main valve member 320 comes into contact with the first high-pressure main valve seat 313 and closes the first high-pressure main valve port 312. In a state where the first high-pressure main valve port 312 is closed, refrigerant in the first high-pressure main valve chamber 311 and the first high-pressure back pressure chamber 314 is restricted from flowing into the first high-pressure main valve port 312, and refrigerant remains in the first high-pressure main valve chamber 311 and the first high-pressure back pressure chamber 314. This causes the main valve member 320 to be pressed to the first high-pressure main valve seat 313 by refrigerant.

In the first high-pressure on-off valve unit 300, when the electromagnetic coil 334 is not energized, the plunger 333 is pushed by the plunger spring 338 and moves upward. The pilot valve member 335 moves upward together with the plunger 333, and the pilot passage 325 opens. Then, refrigerant in the first high-pressure back pressure chamber 314 flows into the first high-pressure main valve port 312 via the pilot passage 325, reducing force applied by refrigerant to press the main valve member 320 to the first high-pressure main valve seat 313. The valve opening spring 337 pushes the main valve member 320 upward, the main valve member 320 moves away from the first high-pressure main valve seat 313, and the first high-pressure main valve port 312 opens. This allows refrigerant in the first high-pressure main valve chamber 311 to flow into the first high-pressure main valve port 312.

The second high-pressure on-off valve unit 400 is disposed in the upper surface 108, near the back surface 102. The second high-pressure on-off valve unit 400 can open and close the second branch high-pressure-refrigerant passage 410. That is, the second high-pressure on-off valve unit 400 can change the passage area of the second branch high-pressure-refrigerant passage 410 to zero or to an area greater than zero. The second high-pressure on-off valve unit 400 is a second valve unit.

As illustrated in Fig. 10, the second high-pressure on-off valve unit 400 constitutes a pilot-operated on-off valve together with the second high-pressure main valve chamber 411, the second high-pressure main valve port 412, and the second high-pressure main valve seat 413 of the high-pressure valve body 100. The second high-pressure main valve chamber 411 is a second valve chamber. The second high-pressure main valve port 412 is a second valve port. The second high-pressure on-off valve unit 400 may include a valve chamber and a valve seat like the electric valve, for example, disclosed in Japanese Unexamined Patent Application Publication No. 2016-200198.

The second high-pressure on-off valve unit 400 includes a main valve member 420 and a valve-member-driving section 430. Since the main valve member 420 and the valve-member-driving section 430 have the same (including substantially the same) configuration as that of the main valve member 320 and the valve-member-driving section 330 of the first high-pressure on-off valve unit 300, their detailed descriptions are omitted.

A manufacturing method of the high-pressure valve device 10 is described below.

An aluminum alloy workpiece having a rectangular parallelepiped shape is formed by extrusion. The high-pressure valve body 100 is manufactured by forming the refrigerant passages in the workpiece by cutting. Specifically, the main high-pressure-refrigerant passage 110, which has the circular columnar shape and extends linearly from the front surface 101 toward the back surface 102 of the workpiece, is formed by cutting. The first high-pressure main valve chamber 311, which extends linearly from the upper surface 108 toward the bottom surface 107 of the workpiece, is formed. The part of the first high-pressure main valve chamber 311 is overlapped with the main high-pressure-refrigerant passage 110 during the formation of the first high-pressure main valve chamber 311. In other words, the shortest distance between the central axis of the first high-pressure main valve chamber 311 and the central axis of the main high-pressure-refrigerant passage 110 is shorter than the sum of the radius of the first high-pressure main valve chamber 311 and the radius of the main high-pressure-refrigerant passage 110. Consequently, the first high-pressure connecting opening 317, which connects the first high-pressure main valve chamber 311 to the main high-pressure-refrigerant passage 110, is formed. The first high-pressure main valve seat 313 is formed at the same time as the first high-pressure main valve chamber 311 is formed. An internal thread is formed on the inner circumferential surface of the first high-pressure main valve chamber 311. The first high-pressure main valve port 312, which extends linearly from the bottom surface 107 toward the upper surface 108 of the workpiece, is formed. The second high-pressure main valve chamber 411, the second high-pressure main valve port 412, the second high-pressure main valve seat 413, and the second high-pressure connecting opening 417 are formed in the same (including substantially the same) manner as the first high-pressure main valve chamber 311, the first high-pressure main valve port 312, the first high-pressure main valve seat 313, and the first high-pressure connecting opening 317 are formed. The order of forming the main high-pressure-refrigerant passage 110, the first high-pressure main valve chamber 311, and the second high-pressure main valve chamber 411 can be changed as desired. The through holes 109, which extend from the left surface 103 to the right surface 104 of the workpiece, are formed by cutting.

The first high-pressure on-off valve unit 300 and the second high-pressure on-off valve unit 400 are manufactured separately from the high-pressure valve body 100. The first high-pressure on-off valve unit 300 is mounted in the first high-pressure main valve chamber 311 by a screw structure, and the second high-pressure on-off valve unit 400 is mounted in the second high-pressure main valve chamber 411 by a screw structure. Thus, the formation of the high-pressure valve device 10 is completed.

As illustrated in Fig. 12 to Fig. 18, the low-pressure valve device 20 includes a low-pressure valve body 200, a first low-pressure on-off valve unit 500, and a second low-pressure on-off valve unit 600. The low-pressure valve device 20 is a second valve device.

The low-pressure valve body 200 is formed, for example, by extruding an aluminum alloy. The low-pressure valve body 200 has a rectangular parallelepiped shape. The low-pressure valve body 200 includes a front surface 201, a back surface 202, a left surface 203, a right surface 204, a bottom surface 207, and an upper surface 208. Each surface is flat. The front surface 201 and the back surface 202 are parallel to each other. The left surface 203 and the right surface 204 are parallel to each other. The left surface 203 is at a right angle to the front surface 201. The bottom surface 207 and the upper surface 208 are parallel to each other. The bottom surface 207 is at a right angle to the front surface 201 and is at a right angle to the left surface 203. The low-pressure valve body 200 is a second valve body.

The front surface 201 includes a main low-pressure-refrigerant passage opening 216. The bottom surface 207 includes a first branch low-pressure-refrigerant passage opening 516 and a second branch low-pressure-refrigerant passage opening 616.

The main low-pressure-refrigerant passage opening 216 is, as illustrated in Fig. 1, connected to an inlet of the accumulator 80 via a pipe P20. The first branch low-pressure-refrigerant passage opening 516 is connected the pipe P11 via a pipe P21. The second branch low-pressure-refrigerant passage opening 616 is connected to a first connection port of the indoor evaporator 60 via a pipe P22.

The low-pressure valve body 200 includes refrigerant passages formed by cutting. Specifically, the low-pressure valve body 200 includes a main low-pressure-refrigerant passage 210, a first branch low-pressure-refrigerant passage 510, and a second branch low-pressure-refrigerant passage 610.

The main low-pressure-refrigerant passage 210 extends linearly from the front surface 201 toward the back surface 202. The main low-pressure-refrigerant passage 210 is connected to the main low-pressure-refrigerant passage opening 216. The main low-pressure-refrigerant passage 210 has a circular columnar shape. The main low-pressure-refrigerant passage 210 may have a constant diameter along its length. The main low-pressure-refrigerant passage 210 may have a columnar shape other than the circular columnar shape. The front surface 201 is one surface.

The first branch low-pressure-refrigerant passage 510 has an L shape. The first branch low-pressure-refrigerant passage 510 extends linearly from the bottom surface 207 toward the upper surface 208 and bends at a right angle toward the right surface 204. The first branch low-pressure-refrigerant passage 510 is connected to the first branch low-pressure-refrigerant passage opening 516.

The first low-pressure on-off valve unit 500 is disposed in the first branch low-pressure-refrigerant passage 510. The first branch low-pressure-refrigerant passage 510 includes, as illustrated in Fig. 16 and Fig. 17, a first low-pressure main valve chamber 511 and a first low-pressure main valve port 512. A central axis of the first low-pressure main valve chamber 511 is parallel to the left-and-right direction. The first low-pressure main valve chamber 511 and the first low-pressure main valve port 512 are disposed coaxially. The first low-pressure main valve port 512 is open to the first low-pressure main valve chamber 511. The first low-pressure main valve port 512 is enclosed by a first low-pressure main valve seat 513 in the first low-pressure main valve chamber 511. The first branch low-pressure-refrigerant passage 510 includes a first connecting passage 515. A central axis of the first connecting passage 515 is parallel to the up-and-down direction. The first connecting passage 515 connects the first low-pressure main valve chamber 511 to the first branch low-pressure-refrigerant passage opening 516.

The first low-pressure main valve chamber 511 has a circular columnar shape. The first low-pressure main valve port 512 has a circular columnar shape with a smaller diameter than the first low-pressure main valve chamber 511. The first low-pressure main valve port 512 is a circular columnar shape portion of the first branch low-pressure-refrigerant passage 510. A part of the first low-pressure main valve port 512 overlaps the main low-pressure-refrigerant passage 210. A first low-pressure connecting opening 517 is formed at a point where the first low-pressure main valve port 512 and the main low-pressure-refrigerant passage 210 overlap. The first low-pressure connecting opening 517 connects the main low-pressure-refrigerant passage 210 to the first branch low-pressure-refrigerant passage 510 (the first low-pressure main valve port 512). The first low-pressure main valve chamber 511 and the first low-pressure main valve port 512 may have a columnar shape other than the circular columnar shapes.

The second branch low-pressure-refrigerant passage 610 has an L shape. The second branch low-pressure-refrigerant passage 610 extends linearly from the bottom surface 207 toward the upper surface 208 and bends at a right angle toward the right surface 204. The second branch low-pressure-refrigerant passage 610 is connected to the second branch low-pressure-refrigerant passage opening 616.

The second low-pressure on-off valve unit 600 is disposed in the second branch low-pressure-refrigerant passage 610. The second branch low-pressure-refrigerant passage 610 includes, as illustrated in Fig. 17, a second low-pressure main valve chamber 611 and a second low-pressure main valve port 612. A central axis of the second low-pressure main valve chamber 611 is parallel to the left-and-right direction. The second low-pressure main valve chamber 611 and the second low-pressure main valve port 612 are disposed coaxially. The second low-pressure main valve port 612 is open to the second low-pressure main valve chamber 611. The second low-pressure main valve port 612 is enclosed by a second low-pressure main valve seat 613 (not illustrated) in the second low-pressure main valve chamber 611. The second branch low-pressure-refrigerant passage 610 includes a second connecting passage 615. A central axis of the second connecting passage 615 is parallel to the up-and-down direction. The second connecting passage 615 connects the second low-pressure main valve chamber 611 to the second branch low-pressure-refrigerant passage opening 616.

The second low-pressure main valve chamber 611 has a circular columnar shape. The second low-pressure main valve port 612 has a circular columnar shape with a smaller diameter than the second low-pressure main valve chamber 611. The second low-pressure main valve port 612 is a circular columnar shape portion of the second branch low-pressure-refrigerant passage 610. A part of the second low-pressure main valve port 612 overlaps the main low-pressure-refrigerant passage 210. A second low-pressure connecting opening 617 is formed at a point where the second low-pressure main valve port 612 and the main low-pressure-refrigerant passage 210 overlap. The second low-pressure connecting opening 617 connects the main low-pressure-refrigerant passage 210 to the second branch low-pressure-refrigerant passage 610 (the second low-pressure main valve port 612). The second low-pressure main valve chamber 611 and the second low-pressure main valve port 612 may have a columnar shape other than the circular columnar shapes.

A central axis of the main low-pressure-refrigerant passage 210 is parallel to the front-and-back direction. A central axis of the first low-pressure main valve port 512 and a central axis of the second low-pressure main valve port 612 are parallel to the left-and-right direction. The central axis of the main low-pressure-refrigerant passage 210 and the central axis of the first low-pressure main valve port 512 intersect each other. The central axis of the main low-pressure-refrigerant passage 210 and the central axis of the second low-pressure main valve port 612 also intersect each other.

The low-pressure valve body 200 includes screw holes 209 that are open to the right surface 204. The inner circumferential surfaces of the screw holes 209 each have an internal thread. The bolts 7 are screwed into the screw holes 209.

The first low-pressure on-off valve unit 500 is disposed in the upper surface 208, near the front surface 201. The first low-pressure on-off valve unit 500 can open and close the first branch low-pressure-refrigerant passage 510. That is, the first low-pressure on-off valve unit 500 can change the passage area of the first branch low-pressure-refrigerant passage 510 to zero or to an area greater than zero. The first low-pressure on-off valve unit 500 is a first valve unit.

As illustrated in Fig. 16 to Fig. 18, the first low-pressure on-off valve unit 500 constitutes a two-stage pilot-operated on-off valve together with the low-pressure valve body 200. The low-pressure valve body 200 includes, as described above, the first low-pressure main valve chamber 511, the first low-pressure main valve port 512, and the first low-pressure main valve seat 513. The low-pressure valve body 200 further includes a first low-pressure back pressure chamber 514, a second stage pilot valve chamber 521, a second stage pilot passage 522, a second stage pilot valve seat 523, and a second stage pressure equalizing passage 529. The first low-pressure main valve chamber 511 is a first valve chamber. The first low-pressure main valve port 512 is a first valve port.

The first low-pressure back pressure chamber 514 has a circular columnar shape. The first low-pressure back pressure chamber 514 is disposed coaxially with the first low-pressure main valve chamber 511. The first low-pressure back pressure chamber 514 has an opening in the left surface 203 of the low-pressure valve body 200, and a lid member 281 closes the opening of the first low-pressure back pressure chamber 514. The second stage pilot valve chamber 521 has a circular columnar shape. A central axis of the second stage pilot valve chamber 521 is parallel to the up-and-down direction. The second stage pilot passage 522 has a circular columnar shape with a smaller diameter than the second stage pilot valve chamber 521. The second stage pilot passage 522 is disposed coaxially with the second stage pilot valve chamber 521. The second stage pilot passage 522 connects the second stage pilot valve chamber 521 to the first low-pressure main valve port 512. The second stage pilot passage 522 is enclosed by the second stage pilot valve seat 523 in the second stage pilot valve chamber 521. The second stage pressure equalizing passage 529 connects the first low-pressure back pressure chamber 514 to the second stage pilot valve chamber 521.

The first low-pressure on-off valve unit 500 includes a valve-member-driving section 530 and a main valve member 540.

The main valve member 540 integrally includes a body portion 541, a large-diameter flange portion 542, and a small-diameter flange portion 543. The body portion 541 has a circular columnar shape. The large-diameter flange portion 542 is provided continuously with one end (the left end in Fig. 16) of the body portion 541. The small-diameter flange portion 543 is provided continuously with the other end (the right end in Fig. 16) of the body portion 541. The body portion 541 includes a pressure equalizing passage 546. The pressure equalizing passage 546 connects the first low-pressure main valve chamber 511 to the first low-pressure back pressure chamber 514. The main valve member 540 comes into contact with and moves away from the first low-pressure main valve seat 513, opening and closing the first low-pressure main valve port 512. That is, the main valve member 540 changes the opening area of the first low-pressure main valve port 512 to zero or to an area greater than zero. A valve closing spring 547 is disposed between the large-diameter flange portion 542 and the low-pressure valve body 200 (the lid member 281). The valve closing spring 547 is a compression coil spring. The valve closing spring 547 pushes the main valve member 540 rightward.

The valve-member-driving section 530 includes a second stage pilot valve member 525, a fixed core 531, a case 532, a plunger 533, an electromagnetic coil 534, a first stage pilot valve member 535, and a spring receiving member 536.

The second stage pilot valve member 525 has a disc shape. The second stage pilot valve member 525 includes a first stage pilot passage 527 and a first stage pressure equalizing passage 528. The second stage pilot valve member 525 comes into contact with and moves away from the second stage pilot valve seat 523, opening and closing the second stage pilot passage 522.

The fixed core 531 integrally includes a large-diameter cylindrical portion 531a and a small-diameter cylindrical portion 531b. The large-diameter cylindrical portion 531a is mounted on the low-pressure valve body 200 by a screw structure. The small-diameter cylindrical portion 531b is disposed coaxially with the large-diameter cylindrical portion 531a. The small-diameter cylindrical portion 531b projects from the upper surface 208 of the low-pressure valve body 200. The second stage pilot valve member 525 is disposed inside the large-diameter cylindrical portion 531a and can move in the up-and-down direction. The second stage pilot valve member 525 separates a first stage pilot valve chamber 524 inside the large-diameter cylindrical portion 531a from the second stage pilot valve chamber 521. The first stage pilot passage 527 connects the first stage pilot valve chamber 524 to the second stage pilot passage 522. The first stage pressure equalizing passage 528 connects the first stage pilot valve chamber 524 to the second stage pilot valve chamber 521. A valve opening spring 537 is disposed between the second stage pilot valve member 525 and the large-diameter cylindrical portion 531a. The valve opening spring 537 is a compression coil spring. The valve opening spring 537 pushes the second stage pilot valve member 525 upward.

The case 532 has a circular cylindrical shape that is open at the lower end and is closed at the upper end. The small-diameter cylindrical portion 531b of the fixed core 531 is disposed inside the lower end of the case 532. The lower end of the case 532 is bonded to the fixed core 531.

The plunger 533 has a circular cylindrical shape that is open at the upper end and is closed at the lower end. The plunger 533 is disposed inside the case 532 and can move in the up-and-down direction. A first plunger spring 538 is disposed between the lower end of the plunger 533 and the fixed core 531. The first plunger spring 538 is a compression coil spring. The first plunger spring 538 pushes the plunger 533 upward. The lower end of the plunger 533 has a through hole 533a.

The electromagnetic coil 534 has a circular cylindrical shape. The case 532 is disposed in the electromagnetic coil 534. The electromagnetic coil 534 is disposed outside the case 532. The electromagnetic coil 534 magnetizes the fixed core 531 and the plunger 533.

The first stage pilot valve member 535 has an elongated circular columnar shape. The first stage pilot valve member 535 is disposed inside the through hole 533a of the plunger 533 and the small-diameter cylindrical portion 531b. The spring receiving member 536 having a circular columnar shape is provided continuously with the upper end of the first stage pilot valve member 535. The spring receiving member 536 is disposed inside the plunger 533. The diameter of the spring receiving member 536 is larger than the diameter of the through hole 533a. A second plunger spring 539 is disposed between the spring receiving member 536 and the upper end of the case 532. The second plunger spring 539 is a compression coil spring. The second plunger spring 539 pushes the spring receiving member 536 downward and presses the spring receiving member 536 to the plunger 533. The lower end of the first stage pilot valve member 535 has a first stage pilot valve portion 535a having a conical shape. The first stage pilot valve portion 535a is disposed in the first stage pilot valve chamber 524. The first stage pilot valve portion 535a opens and closes the first stage pilot passage 527.

In the first low-pressure on-off valve unit 500, when the electromagnetic coil 534 is energized, the plunger 533 is moved toward the fixed core 531 by magnetic force, and the first stage pilot valve member 535 (the first stage pilot valve portion 535a) closes the first stage pilot passage 527. Furthermore, the first stage pilot valve member 535 pushes the second stage pilot valve member 525 downward, and the second stage pilot valve member 525 comes into contact with the second stage pilot valve seat 523 and closes the second stage pilot passage 522. When the second stage pilot passage 522 is closed, refrigerant in the first low-pressure back pressure chamber 514 is restricted from flowing into the first low-pressure main valve port 512 via the second stage pressure equalizing passage 529, the second stage pilot valve chamber 521, and the second stage pilot passage 522. The refrigerant pressure in the first low-pressure back pressure chamber 514 is equal (including substantially equal) to the refrigerant pressure in the first low-pressure main valve chamber 511. The valve closing spring 547 pushes the main valve member 540 rightward, and the main valve member 540 comes into contact with the first low-pressure main valve seat 513 and closes the first low-pressure main valve port 512. In a state where the first low-pressure main valve port 512 is closed, refrigerant in the first low-pressure main valve chamber 511 is restricted from flowing into the first low-pressure main valve port 512. Refrigerant remains in the first low-pressure main valve chamber 511, the first low-pressure back pressure chamber 514, the first stage pilot valve chamber 524, and the second stage pilot valve chamber 521. This causes the second stage pilot valve member 525 to be pressed to the second stage pilot valve seat 523 by refrigerant and the main valve member 540 to be pressed to the first low-pressure main valve seat 513 by refrigerant.

In the first low-pressure on-off valve unit 500, when the electromagnetic coil 534 is not energized, the plunger 533 is pushed by the first plunger spring 538 and moves upward. The first stage pilot valve member 535 also moves upward together with the plunger 533, and the first stage pilot passage 527 opens. Then, refrigerant in the first stage pilot valve chamber 524 flows into the first low-pressure main valve port 512 via the first stage pilot passage 527 and the second stage pilot passage 522, reducing force applied by refrigerant to press the second stage pilot valve member 525 to the second stage pilot valve seat 523. The valve opening spring 537 pushes the second stage pilot valve member 525 upward, the second stage pilot valve member 525 moves away from the second stage pilot valve seat 523, and the second stage pilot passage 522 opens. Refrigerant in the first low-pressure back pressure chamber 514 flows into the first low-pressure main valve port 512 via the second stage pressure equalizing passage 529, the second stage pilot valve chamber 521, and the second stage pilot passage 522. Force applied by refrigerant to move the main valve member 540 away from the first low-pressure main valve seat 513 is applied to the main valve member 540, the main valve member 540 moves away from the first low-pressure main valve seat 513, and the first low-pressure main valve port 512 opens. This allows refrigerant in the first low-pressure main valve chamber 511 to flow into the first low-pressure main valve port 512.

The second low-pressure on-off valve unit 600 is disposed in the upper surface 208, near the back surface 202. The second low-pressure on-off valve unit 600 can open and close the second branch low-pressure-refrigerant passage 610. That is, the second low-pressure on-off valve unit 600 can change the passage area of the second branch low-pressure-refrigerant passage 610 to zero or to an area greater than zero. The second low-pressure on-off valve unit 600 is a second valve unit.

As illustrated in Fig. 17, the second low-pressure on-off valve unit 600 constitutes a two-stage pilot-operated on-off valve together with the low-pressure valve body 200. The low-pressure valve body 200 includes, as described above, the second low-pressure main valve chamber 611, the second low-pressure main valve port 612, and the second low-pressure main valve seat 613. The low-pressure valve body 200 further includes a second low-pressure back pressure chamber 614 (not illustrated), a second stage pilot valve chamber 621, a second stage pilot passage 622, a second stage pilot valve seat 623, and a second stage pressure equalizing passage 629 (not illustrated). The second low-pressure main valve chamber 611 is a second valve chamber. The second low-pressure main valve port 612 is a second valve port.

The second low-pressure back pressure chamber 614 has a circular columnar shape. The second low-pressure back pressure chamber 614 is disposed coaxially with the second low-pressure main valve chamber 611. The second low-pressure back pressure chamber 614 has an opening in the left surface 203 of the low-pressure valve body 200, and a lid member 282 closes the opening of the second low-pressure back pressure chamber 614. The second stage pilot valve chamber 621 has a circular columnar shape. A central axis of the second stage pilot valve chamber 621 is parallel to the up-and-down direction. The second stage pilot passage 622 has a circular columnar shape with a smaller diameter than the second stage pilot valve chamber 621. The second stage pilot passage 622 is disposed coaxially with the second stage pilot valve chamber 621. The second stage pilot passage 622 connects the second stage pilot valve chamber 621 to the second low-pressure main valve port 612. The second stage pilot passage 622 is enclosed by the second stage pilot valve seat 623 in the second stage pilot valve chamber 621. The second stage pressure equalizing passage 629 connects the second low-pressure back pressure chamber 614 to the second stage pilot valve chamber 621.

The second low-pressure on-off valve unit 600 includes a valve-member-driving section 630 and a main valve member 640 (not illustrated). Since the valve-member-driving section 630 and the main valve member 640 have the same (including substantially the same) configuration as that of the valve-member-driving section 530 and the main valve member 540 of the first low-pressure on-off valve unit 500, their detailed descriptions are omitted.

A manufacturing method of the low-pressure valve device 20 is described below.

An aluminum alloy workpiece having a rectangular parallelepiped shape is formed by extrusion. The low-pressure valve body 200 is manufactured by forming the refrigerant passages in the workpiece by cutting. Specifically, the main low-pressure-refrigerant passage 210, which has the circular columnar shape and extends linearly from the front surface 201 toward the back surface 202 of the workpiece, is formed by cutting. The first low-pressure back pressure chamber 514, which extends linearly from the left surface 203 toward the right surface 204 of the workpiece, is formed. The first low-pressure main valve chamber 511, which extends linearly from the first low-pressure back pressure chamber 514 toward the right surface 204, is formed. The first low-pressure main valve seat 513 is formed at the same time as the first low-pressure main valve chamber 511 is formed. The first low-pressure main valve port 512, which extends linearly from the first low-pressure main valve chamber 511 toward the right surface 204, is formed. The part of the first low-pressure main valve chamber 511 is overlapped with the main low-pressure-refrigerant passage 210 during the formation of the first low-pressure main valve chamber 511. Specifically, the central axis of the first low-pressure main valve chamber 511 and the central axis of the main low-pressure-refrigerant passage 210 intersect each other. Consequently, the first low-pressure connecting opening 517, which connects the first low-pressure main valve port 512 to the main low-pressure-refrigerant passage 210, is formed. The second stage pressure equalizing passage 529, which extends linearly from the first low-pressure back pressure chamber 514 toward the side of the right surface 204, is formed. An internal thread is formed on the inner circumferential surface of the first low-pressure back pressure chamber 514. The first connecting passage 515 is formed from the bottom surface 207 toward the upper surface 208 of the workpiece. The second stage pilot valve chamber 521, which extends linearly from the upper surface 208 toward the bottom surface 207 of the workpiece, is formed. The second stage pilot valve seat 523 is formed at the same time as the second stage pilot valve chamber 521 is formed. The second stage pilot passage 522, which extends linearly from the second stage pilot valve chamber 521 toward the bottom surface 207, is formed. An internal thread is formed on the inner circumferential surface of the second stage pilot valve chamber 521. The second low-pressure main valve chamber 611, the second low-pressure main valve port 612, the second low-pressure main valve seat 613, the second low-pressure back pressure chamber 614, the second connecting passage 615, the second low-pressure connecting opening 617, the second stage pilot valve chamber 621, the second stage pilot passage 622, the second stage pilot valve seat 623, and the second stage pressure equalizing passage 629 are formed in the same (including substantially the same) manner as the first low-pressure main valve chamber 511, the first low-pressure main valve port 512, the first low-pressure main valve seat 513, the first low-pressure back pressure chamber 514, the first connecting passage 515, the first low-pressure connecting opening 517, the second stage pilot valve chamber 521, the second stage pilot passage 522, the second stage pilot valve seat 523, and the second stage pressure equalizing passage 529. The screw holes 209, which extend from the right surface 204 toward the left surface 203 of the workpiece, are formed by cutting. The internal threads are formed on the inner circumferential surfaces of the screw holes 209. The order of forming the main low-pressure-refrigerant passage 210, the first low-pressure main valve port 512, and the second low-pressure main valve port 612 can be changed as desired.

The first low-pressure on-off valve unit 500 and the second low-pressure on-off valve unit 600 are manufactured separately from the low-pressure valve body 200. The main valve member 540 and the valve closing spring 547 are disposed in the first low-pressure main valve chamber 511, and the lid member 281 is mounted on the first low-pressure back pressure chamber 514 by a screw structure. The main valve member 640 and a valve closing spring 647 (not illustrated) are disposed in the second low-pressure main valve chamber 611, and the lid member 282 is mounted on the second low-pressure back pressure chamber 614 by a screw structure. The valve-member-driving section 530 is mounted in the first low-pressure main valve chamber 511 by a screw structure, and the valve-member-driving section 630 is mounted in the second low-pressure main valve chamber 611 by a screw structure. Thus, the formation of the low-pressure valve device 20 is completed.

As illustrated in Fig. 19 and Fig. 20, in the valve device assembly 5, the high-pressure valve body 100 of the high-pressure valve device 10 is disposed apart from the low-pressure valve body 200 of the low-pressure valve device 20. Specifically, the right surface 104 of the high-pressure valve body 100 and the right surface 204 of the low-pressure valve body 200 face each other with a gap in between. The gap is, for example, 1 mm to 30 mm. The high-pressure valve body 100 and the low-pressure valve body 200 are connected to each other by the bolts 7. Spacers 8 are interposed between the high-pressure valve body 100 and the low-pressure valve body 200. The spacers 8 have an annular plate-like shape. The bolts 7 are made of a material with a lower thermal conductivity (for example, stainless steel or engineering plastic) than the thermal conductivity of each of the high-pressure valve body 100 and the low-pressure valve body 200 (for example, aluminum alloy). Similar to the bolts 7, the spacers 8 are also made of a material with a lower thermal conductivity than the thermal conductivities of the high-pressure valve body 100 and the low-pressure valve body 200. With this configuration, it is possible to suppress heat exchange between the high-pressure valve body 100 and the low-pressure valve body 200 and to suppress decreases in the cooling efficiency and the heating efficiency of the air conditioning device 1. The high-pressure valve body 100 and the low-pressure valve body 200 may be secured to the bolts 7 using nuts 9 instead of the spacers 8 as a valve device assembly 5A illustrated in Fig. 21. In the gap between the right surface 104 of the high-pressure valve body 100 and the right surface 204 of the low-pressure valve body 200, only members (parts of the bolts 7 and the spacers 8) that secure the high-pressure valve body 100 to the low-pressure valve body 200 are disposed. No pipe or the like connects any of the refrigerant passages of the high-pressure valve body 100 and any of the refrigerant passages of the low-pressure valve body 200 within the gap.

The compressor 30 sucks and compresses refrigerant, and the compressor 30 discharges refrigerant in a high-temperature and high-pressure state. The discharge port of the compressor 30 is connected to the main high-pressure-refrigerant passage opening 116 of the high-pressure valve device 10 via the pipe P10. A heat exchange medium (such as water) is circulated between the indoor condenser 40 and the heater core 42 by the pump 41. The heater core 42 emits heat of refrigerant discharged by the compressor 30. The heater core 42 heats air blown into the cabin of the vehicle. The inlet of the indoor condenser 40 is connected to the second branch high-pressure-refrigerant passage opening 416 of the high-pressure valve device 10 via the pipe P12. An outlet of the indoor condenser 40 is connected to the pipe P22 via a pipe P13 in which the first expansion valve 91 is disposed. The first expansion valve 91 can change the passage area of the pipe P13 in a stepless manner. Refrigerant flows inside the outdoor heat exchanger 50, and heat exchange occurs between refrigerant inside and air outside the outdoor heat exchanger 50. The first connection port of the outdoor heat exchanger 50 is connected to the first branch high-pressure-refrigerant passage opening 316 of the high-pressure valve device 10 via the pipe P11. The pipe P11 is connected to the first branch low-pressure-refrigerant passage opening 516 of the low-pressure valve device 20 via the pipe P21. A second connection port of the outdoor heat exchanger 50 is connected to a second connection port of the indoor evaporator 60 via a pipe P14 in which the second expansion valve 92 is disposed. The second expansion valve 92 can change the passage area of the pipe P14 in a stepless manner. Refrigerant flows inside the indoor evaporator 60, and heat exchange occurs between refrigerant inside the indoor evaporator 60 and air blown into the cabin of the vehicle. The indoor evaporator 60 cools air blown into the cabin of the vehicle. The first connection port of the indoor evaporator 60 is connected to the second branch low-pressure-refrigerant passage opening 616 of the low-pressure valve device 20 via the pipe P22. The battery evaporator 70 cools the driving battery that is not illustrated. An inlet of the battery evaporator 70 is connected to the pipe P14 via a pipe P15 in which the third expansion valve 93 is disposed. The pipe P15 is connected to a point between the outdoor heat exchanger 50 and the second expansion valve 92 in the pipe P14. The third expansion valve 93 can change the passage area of the pipe P15 in a stepless manner. An outlet of the battery evaporator 70 is connected to the pipe P20 via a pipe P16 in which the check valve 94 is disposed. The check valve 94 allows refrigerant to flow from the battery evaporator 70 to the pipe P20. The check valve 94 restricts refrigerant from flowing from the pipe P20 to the battery evaporator 70. Refrigerant flows into the inlet of the accumulator 80, and the accumulator 80 separates refrigerant into gas and liquid phases. Refrigerant in a gas phase flows out from an outlet of the accumulator 80. The inlet of the accumulator 80 is connected to the main low-pressure-refrigerant passage opening 216 of the low-pressure valve device 20 via the pipe P20. The outlet of the accumulator 80 is connected to the suction port of the compressor 30. Refrigerant in a gas phase flows from the accumulator 80 to the compressor 30. In the specification, the meaning of the words "a stepless manner" includes "a substantially stepless manner".

The air conditioning device 1 includes a controller that is not illustrated. The controller controls the high-pressure valve device 10 (the first high-pressure on-off valve unit 300, the second high-pressure on-off valve unit 400), the low-pressure valve device 20 (the first low-pressure on-off valve unit 500, the second low-pressure on-off valve unit 600), the compressor 30, the pump 41, the first expansion valve 91, the second expansion valve 92, and the third expansion valve 93. The air conditioning device 1 includes the cooling operation mode, the heating operation mode, and the dehumidification heating operation mode.

In the cooling operation mode, the controller of the air conditioning device 1 opens the first branch high-pressure-refrigerant passage 310 by the first high-pressure on-off valve unit 300, closes the second branch high-pressure-refrigerant passage 410 by the second high-pressure on-off valve unit 400, closes the first branch low-pressure-refrigerant passage 510 by the first low-pressure on-off valve unit 500, and opens the second branch low-pressure-refrigerant passage 610 by the second low-pressure on-off valve unit 600. Additionally, the controller controls (fully closes) the passage area of the pipe P13 into a size of zero by the first expansion valve 91, controls the passage area of the pipe P14 into a size capable of expanding refrigerant by the second expansion valve 92, and controls the passage area of the pipe P15 into a size capable of expanding refrigerant by the third expansion valve 93. Then, the controller stops the pump 41 and operates the compressor 30. As illustrated in Fig. 2, in the cooling operation mode, refrigerant flows through the compressor 30, the pipe P10, the high-pressure valve device 10 (the main high-pressure-refrigerant passage 110, the first branch high-pressure-refrigerant passage 310), the pipe P11, the outdoor heat exchanger 50, the pipe P14 (the second expansion valve 92), the indoor evaporator 60, the pipe P22, the low-pressure valve device 20 (the second branch low-pressure-refrigerant passage 610, the main low-pressure-refrigerant passage 210), the pipe P20, and the accumulator 80 in this sequence, and then returns to the compressor 30. Additionally, refrigerant branches off the pipe P14, flows through the pipe P15 (the third expansion valve 93), the battery evaporator 70, and the pipe P16 (the check valve 94) in this sequence, and joins the pipe P20. In the cooling operation mode, air cooled by the indoor evaporator 60 is blown into the cabin of the vehicle. Additionally, in the cooling operation mode, the driving battery is cooled by the battery evaporator 70.

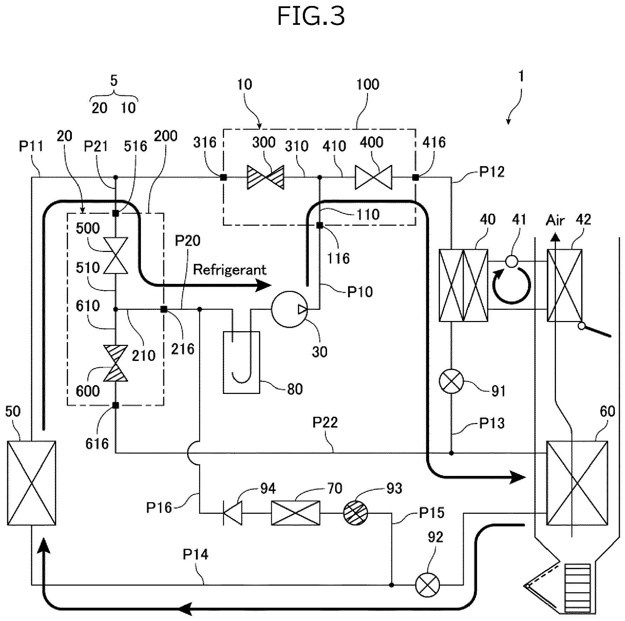

In the heating operation mode, the controller of the air conditioning device 1 closes the first branch high-pressure-refrigerant passage 310 by the first high-pressure on-off valve unit 300, opens the second branch high-pressure-refrigerant passage 410 by the second high-pressure on-off valve unit 400, opens the first branch low-pressure-refrigerant passage 510 by the first low-pressure on-off valve unit 500, and closes the second branch low-pressure-refrigerant passage 610 by the second low-pressure on-off valve unit 600. Additionally, the controller maximizes (fully opens) the passage area of the pipe P13 by the first expansion valve 91, controls the passage area of the pipe P14 into a size capable of expanding refrigerant by the second expansion valve 92, and controls (fully closes) the passage area of the pipe P15 into a size of zero by the third expansion valve 93. Then, the controller operates the pump 41 and the compressor 30. As illustrated in Fig. 3, in the heating operation mode, refrigerant flows through the compressor 30, the pipe P10, the high-pressure valve device 10 (the main high-pressure-refrigerant passage 110, the second branch high-pressure-refrigerant passage 410), the pipe P12, the indoor condenser 40, the pipe P13 (the first expansion valve 91), the indoor evaporator 60, the pipe P14 (the second expansion valve 92), the outdoor heat exchanger 50, the pipe P11, the pipe P21, the low-pressure valve device 20 (the first branch low-pressure-refrigerant passage 510, the main low-pressure-refrigerant passage 210), the pipe P20, and the accumulator 80 in this sequence, and then returns to the compressor 30. In the heating operation mode, air passes the indoor evaporator 60 (without cooling), is heated by the heater core 42, and then is blown into the cabin of the vehicle.

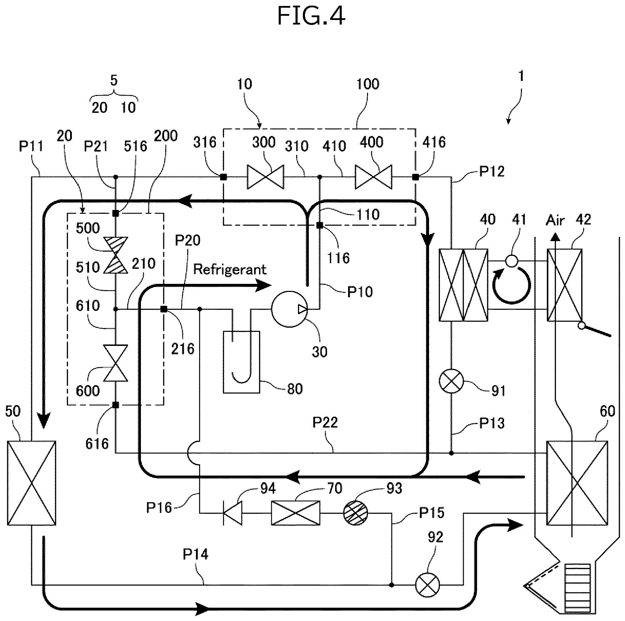

In the dehumidification heating operation mode, the controller of the air conditioning device 1 opens the first branch high-pressure-refrigerant passage 310 by the first high-pressure on-off valve unit 300, opens the second branch high-pressure-refrigerant passage 410 by the second high-pressure on-off valve unit 400, closes the first branch low-pressure-refrigerant passage 510 by the first low-pressure on-off valve unit 500, and opens the second branch low-pressure-refrigerant passage 610 by the second low-pressure on-off valve unit 600. Additionally, the controller maximizes (fully opens) the passage area of the pipe P13 by the first expansion valve 91, controls the passage area of the pipe P14 into a size capable of expanding refrigerant by the second expansion valve 92, and controls (fully closes) the passage area of the pipe P15 into a size of zero by the third expansion valve 93. Then, the controller operates the pump 41 and the compressor 30. As illustrated in Fig. 4, in the dehumidification heating operation mode, refrigerant flows through the compressor 30, the pipe P10, the high-pressure valve device 10 (the main high-pressure-refrigerant passage 110, the first branch high-pressure-refrigerant passage 310), the pipe P11, the outdoor heat exchanger 50, the pipe P14 (the second expansion valve 92), the indoor evaporator 60, the pipe P22, the low-pressure valve device 20 (the second branch low-pressure-refrigerant passage 610, the main low-pressure-refrigerant passage 210), the pipe P20, and the accumulator 80 in this sequence, and then returns to the compressor 30. Additionally, refrigerant flows through the compressor 30, the pipe P10, the high-pressure valve device 10 (the main high-pressure-refrigerant passage 110, the second branch high-pressure-refrigerant passage 410), the pipe P12, the indoor condenser 40, and the pipe P13 (the first expansion valve 91) in this sequence, and joins the pipe P22. In the dehumidification heating operation mode, air is cooled (dehumidified) by the indoor evaporator 60, is heated by the heater core 42, and then is blown into the cabin of the vehicle.

As described above, the high-pressure valve device 10 of the air conditioning device 1 includes the high-pressure valve body 100, the first high-pressure on-off valve unit 300 mounted on the high-pressure valve body 100, and the second high-pressure on-off valve unit 400 mounted on the high-pressure valve body 100. The high-pressure valve body 100 includes the main high-pressure-refrigerant passage 110, the first branch high-pressure-refrigerant passage 310 that is connected to the main high-pressure-refrigerant passage 110, and the second branch high-pressure-refrigerant passage 410 that is connected to the main high-pressure-refrigerant passage 110. The first high-pressure on-off valve unit 300 can change the passage area of the first branch high-pressure-refrigerant passage 310. The second high-pressure on-off valve unit 400 can change the passage area of the second branch high-pressure-refrigerant passage 410. The main high-pressure-refrigerant passage 110 has the circular columnar shape that extends linearly from the front surface 101 toward the back surface 102 of the high-pressure valve body 100. The part of the first high-pressure main valve chamber 311, which has the circular columnar shape, of the first branch high-pressure-refrigerant passage 310 overlaps the main high-pressure-refrigerant passage 110. The part of the second high-pressure main valve chamber 411, which has the circular columnar shape, of the second branch high-pressure-refrigerant passage 410 overlaps the main high-pressure-refrigerant passage 110. With this configuration, the main high-pressure-refrigerant passage 110 and the first branch high-pressure-refrigerant passage 310 (the first high-pressure main valve chamber 311) are connected at a point at which the main high-pressure-refrigerant passage 110 and the first branch high-pressure-refrigerant passage 310 overlap. The main high-pressure-refrigerant passage 110 and the second branch high-pressure-refrigerant passage 410 (the second high-pressure main valve chamber 411) are connected at a point at which the main high-pressure-refrigerant passage 110 and the second branch high-pressure-refrigerant passage 410 overlap. As a result, in the high-pressure valve body 100, no auxiliary passage is required to connect the main high-pressure-refrigerant passage 110 to the first branch high-pressure-refrigerant passage 310, and no auxiliary passage is required to connect the main high-pressure-refrigerant passage 110 to the second branch high-pressure-refrigerant passage 410. Therefore, the shape (route) of the first branch high-pressure-refrigerant passage 310 and the shape (route) of the second branch high-pressure-refrigerant passage 410 can be simplified in the high-pressure valve device 10. The low-pressure valve device 20 also has the same (including substantially the same) functions and effects as those of the high-pressure valve device 10.

The first branch high-pressure-refrigerant passage 310 extends linearly from the bottom surface 107 toward the upper surface 108 of the high-pressure valve body 100. The second branch high-pressure-refrigerant passage 410 extends linearly from the bottom surface 107 toward the upper surface 108 of the high-pressure valve body 100. With this configuration, the shape of the first branch high-pressure-refrigerant passage 310 and the shape of the second branch high-pressure-refrigerant passage 410 can be further simplified.

The central axis of the main high-pressure-refrigerant passage 110 and the central axis of the first high-pressure main valve chamber 311 of the first branch high-pressure-refrigerant passage 310 do not intersect each other. The central axis of the main high-pressure-refrigerant passage 110 and the central axis of the second high-pressure main valve chamber 411 of the second branch high-pressure-refrigerant passage 410 do not intersect each other. For example, in a configuration in which the central axis of the main high-pressure-refrigerant passage 110 and the central axis of the first high-pressure main valve chamber 311 intersect and the central axis of the main high-pressure-refrigerant passage 110 and the central axis of the second high-pressure main valve chamber 411 intersect, the main high-pressure-refrigerant passage 110 extends through the first high-pressure main valve chamber 311 and the second high-pressure main valve chamber 411. In the configuration, refrigerant flows easily between the first high-pressure main valve chamber 311 and the second high-pressure main valve chamber 411, affecting the operation of the main valve member 320 and the main valve member 420. In the high-pressure valve body 100 described above, the central axis of the main high-pressure-refrigerant passage 110 and the central axis of the first high-pressure main valve chamber 311 do not intersect, and the central axis of the main high-pressure-refrigerant passage 110 and the central axis of the second high-pressure main valve chamber 411 do not intersect. In other words, the main high-pressure-refrigerant passage 110 extends to pass a part of each of the first high-pressure main valve chamber 311 and the second high-pressure main valve chamber 411. This enables refrigerant not to flow easily between the first high-pressure main valve chamber 311 and the second high-pressure main valve chamber 411, reducing the effect of refrigerant on the operation of the main valve member 320 and the main valve member 420.

The valve device assembly 5 includes the high-pressure valve device 10 and the low-pressure valve device 20. The high-pressure valve device 10 includes the high-pressure valve body 100 including the refrigerant passages, the first high-pressure on-off valve unit 300 mounted on the high-pressure valve body 100, and the second high-pressure on-off valve unit 400 mounted on the high-pressure valve body 100. The low-pressure valve device 20 includes the low-pressure valve body 200 including the refrigerant passages, the first low-pressure on-off valve unit 500 mounted on the low-pressure valve body 200, and the second low-pressure on-off valve unit 600 mounted on the low-pressure valve body 200. The high-pressure valve body 100 is disposed apart from the low-pressure valve body 200. With this configuration, it is possible to suppress heat exchange between the high-pressure valve body 100 and the low-pressure valve body 200 due to their contact. Therefore, it is possible to suppress the cooling efficiency and the heating efficiency from decreasing.

The high-pressure valve body 100 and the low-pressure valve body 200 are connected by the bolts 7. The bolts 7 are made of the material with the lower thermal conductivity than the thermal conductivities of the high-pressure valve body 100 and the low-pressure valve body 200. With this configuration, it is possible to suppress heat exchange between the high-pressure valve body 100 and the low-pressure valve body 200 via the bolts 7. Therefore, it is possible to suppress the cooling efficiency and the heating efficiency from decreasing. The high-pressure valve body 100 and the low-pressure valve body 200 may be secured to each other with a gap in between by, for example, such as a securing member made of a metal or synthetic resin and manufactured to match the shapes of the high-pressure valve body 100 and the low-pressure valve body 200.

The spacers 8 are interposed between the high-pressure valve body 100 and the low-pressure valve body 200. The spacers 8 are made of the material with the lower thermal conductivity than the thermal conductivities of the high-pressure valve body 100 and the low-pressure valve body 200. With this configuration, the high-pressure valve body 100 is disposed securely apart from the low-pressure valve body 200 by the spacers 8, and it is possible to suppress heat exchange between the high-pressure valve body 100 and the low-pressure valve body 200 via the spacers 8. Therefore, it is possible to suppress the cooling efficiency and the heating efficiency from decreasing.

The high-pressure valve body 100 and the low-pressure valve body 200 are located with a gap in between. No pipe connects any of the refrigerant passages of the high-pressure valve body 100 and any of the refrigerant passages of the low-pressure valve body 200 within the gap. With this configuration, it is possible to suppress heat exchange between the high-pressure valve body 100 and the low-pressure valve body 200 via a pipe. Therefore, it is possible to suppress the cooling efficiency and the heating efficiency from decreasing.

The main high-pressure-refrigerant passage opening 116 (the main high-pressure-refrigerant passage 110) of the high-pressure valve body 100 is connected to the discharge port of the compressor 30. The main low-pressure-refrigerant passage opening 216 (the main low-pressure-refrigerant passage 210) of the low-pressure valve body 200 is connected to the suction port of the compressor 30 via the accumulator 80. With this configuration, high-temperature refrigerant flows into the high-pressure valve body 100, and low-temperature refrigerant flows into the low-pressure valve body 200. Therefore, it is possible to separate the refrigerant passages through which high-temperature refrigerant flows from the refrigerant passages through which low-temperature refrigerant flows.

In the high-pressure valve device 10 and the low-pressure valve device 20 described above, each valve unit is controlled by the controller of a host device or system in which the valve devices are incorporated. In addition, a configuration in which the low-pressure valve device 20 includes a control unit, which receives all signals from the host device or system and centrally controls multiple valve units of the high-pressure valve device 10 and the low-pressure valve device 20, can be employed. In this configuration, preferably, the control unit is housed in a case and is disposed on a surface of the low-pressure valve body 200 of the low-pressure valve device 20 (for example, the back surface 202). With this configuration, it is possible to suppress the temperature rise of the control unit by the relatively low-temperature refrigerant flowing through the refrigerant passages of the low-pressure valve body 200. Further, the control unit may have a function capable of detecting failure of each valve unit of the high-pressure valve device 10 and the low-pressure valve device 20. The control unit may detect failure based on, for example, the voltage of the coil, which is energized. Signals including the failure information of the valve unit detected by the control unit are sent to the host device or system, enabling maintenance operations such as replacement of the valve device including the failed valve unit to be prompted.

Additionally, the first high-pressure on-off valve unit 300 and the second high-pressure on-off valve unit 400 of the high-pressure valve device 10 described above are the pilot-operated on-off valve units that operate by electromagnetic force. These on-off valve units require energization to maintain the valve-closing state where the main valve ports are closed. Instead of these on-off valve units, the high-pressure valve device 10 may employ latching on-off valve units with a configuration in which the valve-opening and valve-closing states are maintained even when the electromagnetic coil is not energized. The low-pressure valve device 20 may also employ the latching on-off valve units.

The high-pressure valve device 10 described above has two on-off valve units, however, the high-pressure valve device 10 may include three or more valve units. The high-pressure valve device 10 may employ a flow control valve unit that can change the passage area of the refrigerant passages in a stepless manner (including a substantially stepless manner), instead of one or both of the on-off valve units.

The valve device assembly 5 described above has two valve devices, however, the valve device assembly 5 may include three or more valve devices.

In this specification, terms indicating shapes, such as "circular cylindrical" and "circular columnar", are also used for members and portions of the members substantially having the shapes indicated by the terms. For example, "a circular cylindrical member" includes a circular cylindrical member and a substantially circular cylindrical member.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

### Reference Signs List

1 ... air conditioning device, 5 ... valve device assembly, 5A ... valve device assembly, 7 ... bolt, 8 ... spacer, 9 ... nut, 10 ... high-pressure valve device, 20 ... low-pressure valve device, 30 ... compressor, 40 ... indoor condenser, 41 ... pump, 42 ... heater core, 50 ... outdoor heat exchanger, 60 ... indoor evaporator, 70 ... battery evaporator, 80 ... accumulator, 91 ... first expansion valve, 92 ... second expansion valve, 93 ... third expansion valve, 94 ... check valve, 100 ... high-pressure valve body, 101 ... front surface, 102 ... back surface, 103 ... left surface, 104 ... right surface, 107 ... bottom surface, 108 ... upper surface, 109 ... through hole, 110 ... main high-pressure-refrigerant passage, 116 ... main high-pressure-refrigerant passage opening, 200 ... low-pressure valve body, 201 ... front surface, 202 ... back surface, 203 ... left surface, 204 ... right surface, 207 ... bottom surface, 208 ... upper surface, 209 ... screw hole, 210 ... main low-pressure-refrigerant passage, 216 ... main low-pressure-refrigerant passage opening, 281 ... lid member, 282 ... lid member, 300 ... first high-pressure on-off valve unit, 310 ... first branch high-pressure-refrigerant passage, 311 ... first high-pressure main valve chamber, 312 ... first high-pressure main valve port, 313 ... first high-pressure main valve seat, 314 ... first high-pressure back pressure chamber, 316 ... first branch high-pressure-refrigerant passage opening, 317 ... first high-pressure connecting opening, 320 ... main valve member, 321 ... body portion, 322 ... large-diameter flange portion, 323 ... small-diameter flange portion, 325 ... pilot passage, 326 ... pressure equalizing passage, 330 ... valve-member-driving section, 331 ... fixed core, 331a ... large-diameter cylindrical portion, 331b ... small-diameter cylindrical portion, 332 ... case, 333 ... plunger, 334 ... electromagnetic coil, 335 ... pilot valve member, 335a ... pilot valve portion, 336 ... valve shaft, 337 ... valve opening spring, 338 ... plunger spring, 400 ... second high-pressure on-off valve unit, 410 ... second branch high-pressure-refrigerant passage, 411 ... second high-pressure main valve chamber, 412 ... second high-pressure main valve port, 413 ... second high-pressure main valve seat, 416 ... second branch high-pressure-refrigerant passage opening, 417 ... second high-pressure connecting opening, 420 ... main valve member, 430 ... valve-member-driving section, 500 ... first low-pressure on-off valve unit, 510 ... first branch low-pressure-refrigerant passage, 511 ... first low-pressure main valve chamber, 512 ... first low-pressure main valve port, 513 ... first low-pressure main valve seat, 514 ... first low-pressure back pressure chamber, 515 ... first connecting passage, 516 ... first branch low-pressure-refrigerant passage opening, 517 ... first low-pressure connecting opening, 521 ... second stage pilot valve chamber, 522 ... second stage pilot passage, 523 ... second stage pilot valve seat, 524 ... first stage pilot valve chamber, 525 ... second stage pilot valve member, 527 ... first stage pilot passage, 528 ... first stage pressure equalizing passage, 529 ... second stage pressure equalizing passage, 530 ... valve-member-driving section, 531 ... fixed core, 531a ... large-diameter cylindrical portion, 531b ... small-diameter cylindrical portion, 532 ... case, 533 ... plunger, 533a ... through hole, 534 ... electromagnetic coil, 535 ... first stage pilot valve member, 535a ... first stage pilot valve portion, 536 ... spring receiving member, 537 ... valve opening spring, 538 ... first plunger spring, 539 ... second plunger spring, 540 ... main valve member, 541 ... body portion, 542 ... large-diameter flange portion, 543 ... small-diameter flange portion, 546 ... pressure equalizing passage, 547 ... valve closing spring, 600 ... second low-pressure on-off valve unit, 610 ... second branch low-pressure-refrigerant passage, 611 ... second low-pressure main valve chamber, 612 ... second low-pressure main valve port, 613 ... second low-pressure main valve seat, 614 ... second low-pressure back pressure chamber, 615 ... second connecting passage, 616 ... second branch low-pressure-refrigerant passage opening, 617 ... second low-pressure connecting opening, 621 ... second stage pilot valve chamber, 622 ... second stage pilot passage, 623 ... second stage pilot valve seat, 629 ... second stage pressure equalizing passage, 630 ... valve-member-driving section, 640 ... main valve member, 647 ... valve closing spring, P10 to P16, P20 to P22 ... pipe

## Claims

1. A valve device assembly comprising:
valve devices that are combined,
wherein the valve devices each include a valve body including refrigerant passages and valve units mounted on the valve body, and
wherein a first valve device of the valve devices includes the valve body referred to as a first valve body, a second valve device of the valve devices includes the valve body referred to as a second valve body, and the first valve body is disposed apart from the second valve body.

2. The valve device assembly according to Claim 1,
wherein the first valve body and the second valve body are connected by a bolt, and
wherein the bolt is made of a material with a lower thermal conductivity than a thermal conductivity of each of the first valve body and the second valve body.

3. The valve device assembly according to Claim 2,
wherein a spacer is interposed between the first valve body and the second valve body, and
wherein the spacer is made of a material with a lower thermal conductivity than the thermal conductivity of each of the first valve body and the second valve body.

4. The valve device assembly according to Claim 2 or Claim 3,
wherein the first valve body and the second valve body are located with a gap in between, and
wherein no pipe connects any of the refrigerant passages of the first valve body and any of the refrigerant passages of the second valve body within the gap.

5. The valve device assembly according to any one of Claim 1 to Claim 4,
wherein the refrigerant passages of the first valve body include a refrigerant passage connected to a discharge port of a compressor of an air conditioning device, and
wherein the refrigerant passages of the second valve body include a refrigerant passage connected to a suction port of the compressor via an accumulator.
